# FASCICULE DE BREVET EUROPEEN

(11) **EP 4 594 112 B1**
(45) Date de publication et mention de la délivrance du brevet: **20.05.2026**
(21) Numéro de dépôt: 23776672.0
(22) Date de dépôt: 01.09.2023
(51) Int. Cl.: B60B 7/04, B60B 7/08, B60B 7/06, B60B 3/04

(54) **ENJOLIVEUR POUR UNE ROUE EN TOLE A POSITIONEMENT PERIPHERIQUE AMELIORE**
PERIPHER BESSER POSITIONIERTE ZIERBLENDE FÜR BLECHRAD
PERIPHERALLY BETTER POSITIONED TRIM COVER FOR A SHEET-METAL WHEEL

(30) Priorité: 26.09.2022 FR 2209740
(43) Date de publication de la demande: 06.08.2025
(73) Titulaire: Stellantis Auto SAS, 78300 Poissy (FR)
(72) Inventeur: PALPACUER, Eric, 75013 PARIS (FR)
(74) Mandataire: BCIP
(86) Numéro de dépôt international: PCT/FR2023/051322
(87) Numéro de publication internationale: WO 2024/069072

(56) Documents cités:
- FR-A1- 3 093 673
- FR-A1- 3 116 232
- US-A- 3 361 483

## Description

La présente invention revendique la priorité de la demande française 2209740 déposée le 26 septembre 2022.

La présente invention concerne un enjoliveur pour une roue en tôle, elle concerne aussi une roue en tôle comportant un tel enjoliveur et un véhicule comportant une telle roue en tôle équipé d'un tel enjoliveur.

La présente invention concerne plus particulièrement un tel enjoliveur pour une roue en tôle du type comportant une jante qui comporte en son centre un voile, ledit voile comportant une série d'ouvertures en bordure de la jante, ledit enjoliveur étant adapté pour être positionné au niveau d'une desdites ouvertures et comportant une partie de maintien qui comporte une première partie adaptée pour prendre appui contre un bord de ladite ouverture et une seconde partie adaptée pour prendre appui contre un bord de ladite jante et comportant une partie d'habillage adaptée pour être fixée sur la partie de maintien tout en la recouvrant au moins partiellement.

Le document FR-A1-3116232 divulgue un tel enjoliveur pour une roue en tôle du type comportant une jante qui comporte en son centre un voile, le voile comportant une série d'ouvertures en bordure de la jante où des enjoliveurs sont positionnés au niveau d'une partie des ouvertures, les enjoliveurs comportant une première partie de maintien qui est adaptée pour prendre appui contre un bord de l'ouverture correspondante et contre la jante.

De telles ouvertures dans les roues en tôle ne sont pas réalisées avec une grande précision, faisant que leur positionnement peut légèrement varier d'une ouverture à une autre.

Un tel enjoliveur, du fait de son maintien le long du bord de l'ouverture de la jante en tôle, est dépendant du positionnement de chaque ouverture, faisant que chaque roue en tôle peut avoir des enjoliveurs qui n'ont pas tous le même alignement périphérique, créant des décalages de positionnement qui posent un problème esthétique et qui peut aussi poser des problèmes de vibration.

Le dispositif selon l'invention permet de remédier à ces inconvénients.

Il comporte en effet, selon l'invention, un enjoliveur pour une roue en tôle du type comportant une jante qui comporte en son centre un voile, ledit voile comportant une série d'ouvertures en bordure de la jante, ledit enjoliveur étant adapté pour être positionné au niveau d'une desdites ouvertures et comportant une partie de maintien qui comporte une première partie adaptée pour prendre appui contre un bord de ladite ouverture et une seconde partie adaptée pour prendre appui contre un bord de ladite jante et comportant une partie d'habillage adaptée pour être fixée sur la partie de maintien tout en la recouvrant au moins partiellement, la partie de maintien comportant un support qui se prolonge de la seconde partie de la partie de maintien, le support comportant une surface d'appui de référence contre laquelle vient en appui une surface d'appui de référence de la partie d'habillage lorsque la partie d'habillage est fixée sur la partie de maintien.

De telles surfaces d'appui permettent de garantir un bon positionnement périphérique de la partie d'habillage par rapport à la jante de la roue en tôle.

Selon une première caractéristique de l'invention, la partie d'habillage comporte des premiers moyens de clippage adaptés pour être fixés sur le support de la partie de maintien.

Selon une deuxième caractéristique de l'invention, la partie de maintien comporte une partie intermédiaire qui relie la première partie à la seconde partie de ladite partie de maintien.

Selon une troisième caractéristique de l'invention, le support s'étend à l'intérieur de la partie intermédiaire, de la seconde partie vers la première partie de ladite partie de maintien.

Selon une quatrième caractéristique de l'invention, le support présente une forme en T qui comporte un bord distal avec la seconde partie de la partie de maintien qui forme la surface d'appui du support, deux bords opposés adjacents audit bord distal, formant des supports pour les premiers moyens de clippage de la partie d'habillage.

Selon une cinquième caractéristique de l'invention, la première partie de la partie de maintien comporte un support pour des seconds moyens de clippage de la partie d'habillage.

Selon une sixième caractéristique de l'invention, les premiers moyens de clippage de la partie d'habillage comportent deux premières pattes de clippage positionnées de telle sorte à être clippées de part et d'autre de la forme en T du support de la seconde partie de la partie de maintien, les second moyens de clippage de la partie d'habillage comportant une troisième patte de clippage qui est positionnée de telle sorte à être clippée contre la première partie de la partie de maintien.

Selon une septième caractéristique de l'invention, la troisième patte de clippage de la partie d'habillage est positionnée dans l'alignement de la surface d'appui de ladite partie d'habillage.

La présente invention concerne aussi une roue en tôle qui comporte un tel enjoliveur.

Elle concerne aussi un véhicule qui comporte au moins une telle roue en tôle.

Les dessins annexés illustrent l'invention :
[Fig. 1] représente une roue en tôle qui comporte une jante avec en son centre un voile et au moins un enjoliveur selon l'invention qui recouvre au moins partiellement une ouverture formée dans le voile.
[Fig. 2] représente une vue lors de l'assemblage d'un des enjoliveurs selon l'invention, où est plus particulièrement visible une partie de maintien de l'enjoliveur et une partie d'habillage de l'enjoliveur qui est adaptée pour être fixée sur la partie de maintien tout en la recouvrant au moins partiellement.
[Fig. 3] représente une seconde vue lors de l'assemblage d'un des enjoliveurs selon l'invention.

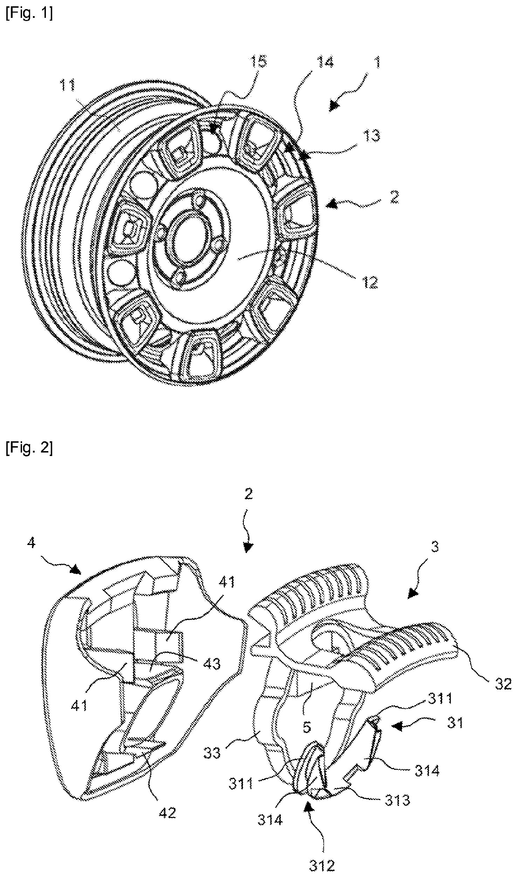

La figure 1 représente une roue en tôle 1 qui comporte une jante 11 avec en son centre un voile 12.

La jante 11 comporte une première gorge 13 qui est formée par un bord libre extérieur recourbé et une seconde gorge 14 qui est positionnée à la bordure de la jante 11 avec le voile 12.

Le voile 12 comporte une série d'ouvertures 15 qui sont formés en bordure du voile 12 et de la jante 11, des enjoliveurs 2 étant positionnés au niveau d'une partie de ces ouvertures 15, les masquant en partie.

Sur l'exemple tel que représenté, seule une ouverture 15 sur deux est masquée par un enjoliveur 2, mais en fonction du rapprochement des ouvertures 15 et de la taille des enjoliveurs 2, on peut avoir plus ou moins d'enjoliveurs 2.

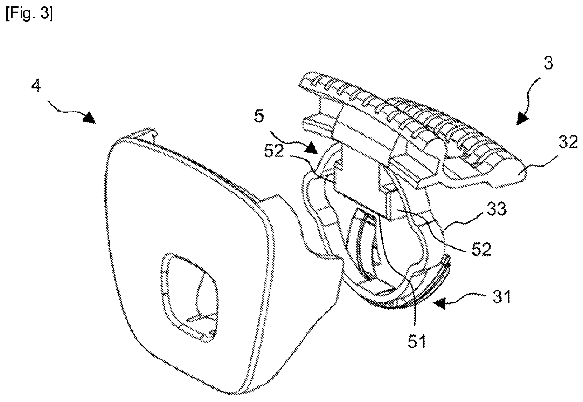

Comme plus particulièrement visible sur les figures 2 et 3, l'enjoliveur 2 comporte deux parties :
- une partie de maintien 3 qui comporte une première partie 31 adaptée pour prendre appui contre un bord de l'ouverture 15 et une seconde partie 32 adaptée pour prendre appui contre un bord de ladite jante 11, se positionnant dans la première gorge 13 et dans la seconde gorge 14, en bordure de ladite ouverture 15, et
- une partie d'habillage 4 adaptée pour être fixée sur la partie de maintien 3 tout en la recouvrant au moins partiellement.

La partie de maintien 3 comporte une partie intermédiaire 33 qui relie de façon rigide la première partie 31 et la seconde partie 32 de ladite partie de maintien 3.

La partie intermédiaire 33 de la partie de maintien 3 est adaptée pour se déformer élastiquement lors du montage de la première partie 31 de la partie de maintien 3 dans l'ouverture 15 de la roue 1.

La première partie 31 de la partie de maintien 3 comporte une forme en arc de cercle 311 dans laquelle est formée une rainure 312 qui est adaptée pour recevoir une partie du bord de l'ouvertures 15.

La première partie 31 de la partie de maintien 3 comporte le long de la partie en arc de cercle 311 trois rampes de guidage qui permettent de guider une partie du bord de l'ouverture 15 dans la rainure 312 de la forme en arc de cercle 311 lors de l'assemblage de la partie de maintien 3 de l'enjoliveur 2 sur la roue 1.

La première partie 31 de la partie de maintien 3 est reliée en son centre à la partie intermédiaire 33 de la partie de maintien 3 et comporte à cet emplacement central une première rampe de guidage 313.

Le long de la première partie 31 en arc de cercle 311 de la partie de maintien 3 sont positionnées symétriquement, de part et d'autre de la première rampe de guidage 313, deux secondes rampes de guidage 314, les trois rampes de guidage étant dans un même alignement circulaire.

Les deux secondes rampes de guidage 314 comportent chacune une première pente qui commence aux extrémités libres de la partie en arc de cercle 311 et qui montent progressivement le long de la partie en arc de cercle 311 jusqu'à la hauteur de la première rampe de guidage 313.

Les deux secondes rampes de guidage 314 comportent chacune une seconde pente qui commencent le long du bord extérieur de la forme en arc de cercle 311 de la première partie 31 de la partie de maintien 3 et qui montent progressivement jusqu'au bord intérieur, la seconde pente étant identique à la pente de la première rampe de guidage 313.

La partie de maintien 3 comporte un support 5 qui se prolonge de la seconde partie 32 de la partie de maintien 3, avec une forme en T, dans l'espace laissé libre de la partie intermédiaire 33.

La partie d'habillage 4 comporte deux premières pattes de clippage 41 adaptées pour être fixées sur le support 5 de la partie de maintien 3 et une troisième patte de clippage 42 adaptée pour être fixée sur la première partie 31 de la partie de maintien 3.

Le support 5 comporte une surface d'appui 51 de référence contre laquelle vient en appui une surface d'appui 43 de référence de la partie d'habillage 4, une fois la partie d'habillage 4 de fixée sur la partie de maintien 3.

La troisième patte de clippage 42, de par son positionnement dans l'alignement de la surface d'appui 43 de la partie d'habillage 4, crée une force d'appui contre la première partie 31 de la partie de maintien 3 permettant de plaquer la surface d'appui 43 de la partie d'habillage 4 contre la surface d'appui 51 du support 5.

Une telle position plaquée de la surface d'appui 43 de la partie d'habillage 4 contre la surface d'appui 51 du support 5, permet de garantir un bon positionnement de la partie d'habillage 4 par rapport à la jante 11 de la roue en tôle 1.

Ainsi, si le positionnement de la première partie 31 de la partie de maintien 3 est aléatoire du fait de sa dépendance du positionnement des ouvertures 15 du voile 12 de la roue en tôle 1 (les ouvertures 15 du voile 12 pouvant légèrement varier d'une roue en tôle 1 à une autre) le positionnement de la jante 11 est précise et permet d'avoir un bon alignement périphérique des enjoliveurs 2 sur la jante en tôle 1.

La flexibilité de la troisième patte de clippage 42 de la partie d'habillage 4 et la flexibilité de la partie intermédiaire 33 de la partie de maintien 3 permet de compenser cette variation de positionnement des ouvertures 15 du voile 12 de la roue en tôle 1.

La surface d'appui 51 du support 5 est positionnée le long bord distal du support 5 par rapport à la seconde partie 32 de la partie de maintien 3, les deux bords adjacents 52 de part et d'autre du bord distal 51, permettent de clipper les deux premières pattes de clippage 41 de la partie d'habillage 4.

Les deux premières pattes de clippage 41 de la partie d'habillage 4 une fois clippées, peuvent coulisser le long du support 5, avec une direction de glisse qui est perpendiculaire à la surface d'appui 51 de ce support 5, pour s'adapter sans s'opposer au bon positionnement périphérique de l'enjoliveur 2 par rapport à la jante 11 de la roue en tôle 1.

## Revendications

1. Enjoliveur (2) pour une roue en tôle (1) du type comportant une jante (11) qui comporte en son centre un voile (12), ledit voile (12) comportant une série d'ouvertures (15) en bordure de la jante (11), ledit enjoliveur (2) étant adapté pour être positionné au niveau d'une desdites ouvertures (15) et comportant une partie de maintien (3) qui comporte une première partie (31) adaptée pour prendre appui contre un bord de ladite ouverture (15) et une seconde partie (32) adaptée pour prendre appui contre un bord de ladite jante (11) et comportant une partie d'habillage (4) adaptée pour être fixée sur la partie de maintien (3) tout en la recouvrant au moins partiellement, **caractérisé en ce que** la partie de maintien (3) comporte un support (5) qui se prolonge de la seconde partie (32) de la partie de maintien (3), le support (5) comportant une surface d'appui (51) de référence contre laquelle vient en appui une surface d'appui (43) de référence de la partie d'habillage (4) lorsque la partie d'habillage (4) est fixée sur la partie de maintien (3).

2. Enjoliveur (2) selon la revendication 1, **caractérisé en ce que** la partie d'habillage (4) comporte des premiers moyens de clippage (41) adaptés pour être fixés sur le support (5) de la partie de maintien (3).

3. Enjoliveur (2) selon la revendication 2, **caractérisé en ce que** la partie de maintien (3) comporte une partie intermédiaire (33) qui relie la première partie (31) à la seconde partie (32) de ladite partie de maintien (3).

4. Enjoliveur (2) selon la revendication 3, **caractérisé en ce que** le support (5) s'étend à l'intérieur de la partie intermédiaire (33), de la seconde partie (32) vers la première partie (31) de ladite partie de maintien (3).

5. Enjoliveur (2) selon l'une quelconque des revendications 2 à 4, **caractérisé en ce que** le support (5) présente une forme en T qui comporte un bord distal (51) avec la seconde partie (32) de la partie de maintien (3) qui forme la surface d'appui du support (5), deux bords opposés (52) adjacents audit bord distal (51), formant des supports pour les premiers moyens de clippage (41) de la partie d'habillage (4).

6. Enjoliveur (2) selon l'une quelconque des revendications 1 à 5, **caractérisé en ce que** la première partie (31) de la partie de maintien (3) comporte un support pour des seconds moyens de clippage de la partie d'habillage (4).

7. Enjoliveur (2) selon la revendication 6 prise dans la dépendance de la revendication 5, **caractérisé en ce que** les premiers moyens de clippage de la partie d'habillage (4) comportent deux premières pattes de clippage (41) positionnées de telle sorte à être clippées de part et d'autre de la forme en T du support (5) de la seconde partie (32) de la partie de maintien (3), les second moyens de clippage de la partie d'habillage (4) comportant une troisième patte de clippage (42) qui est positionnée de telle sorte à être clippée contre la première partie (31) de la partie de maintien (3).

8. Enjoliveur (2) selon la revendication 7, **caractérisé en ce que** la troisième patte de clippage (42) de la partie d'habillage (4) est positionnée dans l'alignement de la surface d'appui (43) de ladite partie d'habillage (4).

9. Roue (1) comportant un enjoliveur (2) selon l'une quelconque des revendications précédentes.

10. Véhicule comportant une roue (1) selon la revendication précédente.

## Patentansprüche

1. Zierkappe (2) für ein Blechrad (1) des Typs mit einer Felge (11), die in ihrer Mitte einen Steg (12) aufweist, wobei der Steg (12) eine Reihe von Öffnungen (15) am Rand der Felge (11) aufweist, wobei die Zierkappe (2) so ausgelegt ist, dass sie an einer der Öffnungen (15) positioniert werden kann, und einen Halteabschnitt (3) aufweist, der einen ersten Abschnitt (31), der so ausgelegt ist, dass er sich gegen einen Rand der Öffnung (15) abstützt, und einen zweiten Abschnitt (32) aufweist, der so ausgelegt ist, dass er sich gegen einen Abstützenden Rand der Felge (11) und mit einem Verkleidungsteil (4), das geeignet ist, an dem Halteteil (3) befestigt zu werden, während es es wenigstens teilweise abgedeckt ist, **dadurch gekennzeichnet, dass** das Halteteil (3) einen Träger (5) aufweist, der sich von dem zweiten Teil (32) des Halteteils (3) erstreckt, wobei der Träger (5) eine Referenz-Auflagefläche (51) aufweist, an der eine Referenz-Auflagefläche (43) des Verkleidungsteils (4) zur Anlage kommt, wenn das Verkleidungsteil (4) an dem Halteteil (3) befestigt ist.

2. Zierkappe (2) nach Anspruch 1, **dadurch gekennzeichnet, dass** das Verkleidungsteil (4) erste Klemmmittel (41) aufweist, die geeignet sind, an dem Träger (5) des Halteteils (3) befestigt zu werden.

3. Zierkappe (2) nach Anspruch 2, **dadurch gekennzeichnet, dass** der Halteabschnitt (3) einen Zwischenabschnitt (33) aufweist, der den ersten Abschnitt (31) mit dem zweiten Abschnitt (32) des Halteabschnitts (3) verbindet.

4. Zierkappe (2) nach Anspruch 3, **dadurch gekennzeichnet, dass** sich der Träger (5) innerhalb des Zwischenabschnitts (33) von dem zweiten Abschnitt (32) zu dem ersten Abschnitt (31) des Halteabschnitts (3) erstreckt.

5. Zierkappe (2) nach einem der Ansprüche 2 bis 4, **dadurch gekennzeichnet, dass** der Träger (5) eine T-Form aufweist, die einen distalen Rand (51) mit dem zweiten Teil (32) des Halteteils (3), der die Auflagefläche des Trägers (5) bildet, aufweist, wobei zwei gegenüberliegende Ränder (52) benachbart zu dem distalen Rand (51) Träger für die ersten Klemmmittel (41) des Verkleidungsteils (4) bilden.

6. Zierkappe (2) nach einem der Ansprüche 1 bis 5, **dadurch gekennzeichnet, dass** der erste Teil (31) des Halteteils (3) eine Halterung für zweite Klemmmittel des Verkleidungsteils (4) aufweist.

7. Zierkappe (2) nach Anspruch 6 in Abhängigkeit von Anspruch 5, **dadurch gekennzeichnet, dass** die ersten Einrastmittel des Verkleidungsteils (4) zwei erste Einrastlaschen (41) aufweisen, die so angeordnet sind, dass sie beiderseits der T-Form des Trägers (5) des zweiten Teils (32) des Halteteils (3) einrasten, wobei die zweiten Einrastmittel des Verkleidungsteils (4) eine dritte Einrastlasche (42) aufweisen, die so angeordnet ist, dass sie gegen das Verkleidungsteil einrastet Erster Teil (31) des Halteteils (3).

8. Zierkappe (2) nach Anspruch 7, **dadurch gekennzeichnet, dass** die dritte Klipslasche (42) des Verkleidungsteils (4) in Ausrichtung mit der Auflagefläche (43) des Verkleidungsteils (4) angeordnet ist.

9. Rad (1) mit einer Zierkappe (2) nach einem der vorhergehenden Ansprüche.

10. Fahrzeug mit einem Rad (1) nach dem vorhergehenden Anspruch.

## Claims

1. Trim (2) for a sheet metal wheel (1) of the type comprising a rim (11) which comprises in its compound a web (12), said web (12) comprising a series of openings (15) at the edge of the rim (11), said trim (2) being adapted to be positioned at the level of one of said openings (15) and comprising a retaining part (3) which comprises a first part (31) adapted to bear against an edge of said opening (15) and a second part (32) adapted to bear against an edge of said rim (11) and comprising a trim part (4) adapted to be fixed to the retaining part (3) while at least partially covering it, wherein the retaining part (3) comprises a support (5) which extends) (32) of the holding part (3), the support (5) comprising a reference bearing surface (51) against which bears a reference bearing surface (43) of the trim part (4) when the trim part (4) is fixed to the holding part (3).

2. Trim (2) according to claim 1, **characterised in that** the trim part (4) comprises first clipping means (41) adapted to be fixed to the support (5) of the holding part (3).

3. Trim (2) according to claim 2, **characterised in that** the holding part (3) comprises an intermediate part (33) which connects the first part (31) to the second part (32) of said holding part (3).

4. Trim (2) according to claim 3, **characterised in that** the support (5) extends inside the intermediate part (33), from the second part (32) towards the first part (31) of said holding part (3).

5. Trim (2) according to any one of claims 2 to 4, **characterised in that** the support (5) has a T-shape which comprises a distal edge (51) with the second part (32) of the holding part (3) which forms the bearing surface of the support (5), two opposite edges (52) adjacent to said distal edge (51), forming supports for the first clipping means (41) of the trim part (4).

6. Trim (2) according to any one of claims 1 to 5, **characterised in that** the first part (31) of the holding part (3) comprises a support for second means for clipping the trim part (4).

7. Trimming device (2) according to claim 6 taken in the dependence of claim 5, **characterised in that** the first clipping means of the trim part (4) comprise two first clipping lugs (41) positioned so as to be clipped on either side of the T-shape of the support (5) of the second part (32) of the holding part (3), the second clipping means of the trim part (4) comprising a third clipping lug (42) which is positioned so as to be clipped against the first part (31) of the holding part (3).

8. Trim (2) according to claim 7, **characterised in that** the third clipping tab (42) of the trim part (4) is positioned in alignment with the bearing surface (43) of said trim part (4).

9. Wheel (1) comprising a trim (2) according to any one of the previous claims.

10. Vehicle comprising a wheel (1) according to the previous claim.
